# EUROPEAN PATENT SPECIFICATION

(11) **EP 3 526 069 B1**
(45) Date of publication and mention of the grant of the patent: **24.02.2021**
(21) Application number: 17780755.9
(22) Date of filing: 09.10.2017
(51) Int. Cl.: B60K 15/077, B60K 15/03

(54) **A SYSTEM FOR THE REDUCTION OF SLOSH NOISES IN A FUEL TANK**
SYSTEM ZUR VERRINGERUNG VON SCHWAPPGERÄUSCHEN IN EINEM KRAFTSTOFFTANK
SYSTÈME DE RÉDUCTION DES BRUITS DE BALLOTEMENT DANS UN RÉSERVOIR À CARBURANT

(30) Priority: 11.10.2016 EP 16193310
(43) Date of publication of application: 21.08.2019
(73) Proprietor: Plastic Omnium Advanced Innovation and Research, 1130 Bruxelles (BE)
(72) Inventor: LIM, Hwan-Eun, Gyeonggi-do 104-402 (KR); KIM, Tae-Wan, Gyeonggi-do 203-301 (KR)
(74) Representative: LLR
(86) International application number: PCT/EP2017/075642
(87) International publication number: WO 2018/069228

(56) References cited:
- EP-A1- 2 660 090
- DE-A1-102014 222 145
- US-A1- 2006 071 003
- US-A1- 2014 144 914
- US-A1- 2016 096 428

## Description

The present invention relates to a system for the reduction of slosh noises (or splashing noises) in a fuel tank of a motor vehicle.

Fuel tanks of motor vehicles generally comprise internal accessories. One particular case of such accessories is that of noise reduction baffles, the purpose of which is to absorb the noise ("slosh" noise) associated with the waves which may be generated inside the tank when the vehicle accelerates rapidly, brakes, turns, etc. Such baffles are also known as "anti-slosh baffles" in the automotive field.

Various types of baffles are known in the art. US4526286 discloses a plastic fuel tank having an integral splash baffle. US6408979 discloses a plastic fuel tank having a baffle with a filter media material. EP2323863 discloses a plastic fuel tank having a baffle with compression springs.

A fuel tank baffle assembly provided for installation in a fuel tank is known from US 2014/144914 A1.

There is a constant objective to reduce slosh noises to as great an extent as possible.

The object of the present invention is to provide an alternative system for the reduction of slosh noises of a fuel tank.

According to the present invention, there is provided a fuel tank as defined in claim 1.

Thus, it is proposed a two-stage damping system, with the side wing(s) acting as a first wave damper and forming a primary damping stage; and the damping rib(s) acting as a second wave damper and forming a secondary damping stage. With this system, the energy of the waves generated inside the tank when for example the vehicle brakes, is sequentially reduced as the waves move inside the tank. Thus, splashing or breaking of a strong wave is avoided by virtue of this system.

At the primary damping stage, the side wing is configured to slow the velocity of the moving waves and to guide the waves toward the damping rib.

In a particular embodiment, the side wing may be oriented such that the wave is guided to a top wall and/or a sidewall portion of the tank, and the wave reflects back from the wall portion and propagates toward the damping rib at a particularly low velocity. Advantageously, the wall portion may be shaped (i.e. formed) such that the wave deflected by the side wing flows silently along the wall portion. In some examples, the wall portion of the fuel tank may be rounded in order to assist in reducing energy of any waves of liquid fuel that come in contact with the wall portion of the fuel tank.

Alternatively, the side wing may be oriented such that the wave is guided directly to the damping rib at a particularly low velocity.

At the secondary damping stage, the damping rib is configured to disperse the deflected or reflected waves to reduce the energy of the waves and reduce sloshing or other noises associated with movement of liquid fuel in the tank.
In a particular embodiment, a plurality of damping ribs may be formed at the top and/or bottom and/or side wall of the tank and may be arranged one to another in a manner such that it creates a cascading damping effect (i.e. successive dispersion of the energy of the waves).

The side wing(s) may have any geometric shape including, for example, rectangular, triangular or any other shape.

The side wing may be planar or non-planar (i.e. curved).

In a particular embodiment, the side wing is a rectangular plate. Advantageously, the side wing(s) may be shaped and oriented so that slosh noises do not occur when the flow of fuel impinges onto the side wing(s).

According to another advantageous embodiment, a sharp impingement of the fuel onto the side wing(s) can be further damped in a simple way if the side wing(s) are designed resiliently.

The side wing(s) may be attached to the main body by any means known in the art (welding, snap-riveting, screwing, gluing, etc.).

In a particular embodiment, the main body and the side wing(s) may be made of thermoplastic, for example HDPE.

In a particular embodiment, the side wing(s) is(are) molded in one piece with the main body. Such assembly can be easily manipulated and attached inside the fuel tank. For example, such assembly can be attached during the manufacturing of the fuel tank. For example, it can be used the attachment process disclosed in document EP2155469 in the name of the Applicant.

The term "fuel tank" is understood to mean a substantially impermeable tank that can store fuel under diverse and varied environmental and usage conditions. The fuel tank according to the invention is preferably made of plastic, that is to say made of a material comprising at least one synthetic resin polymer. Particularly suitable are plastics that belong to the category of thermoplastics.

The term "thermoplastic" is understood to mean any thermoplastic polymer, including thermoplastic elastomers, and blends thereof. The term "polymer" is understood to mean both homopolymers and copolymers (especially binary or ternary copolymers). Examples of such copolymers are: random copolymers, linear block copolymers, other block copolymers and graft copolymers. One polymer often employed is high-density polyethylene (HDPE). However, excellent results may also be obtained with polyamide.

Preferably, the tank also comprises a layer of a fuel-impermeable resin such as, for example, EVOH (a partially hydrolysed ethylene/vinyl acetate copolymer). Alternatively, the tank may be subjected to a surface treatment (fluorination or sulphonation) for the purpose of making it impermeable to fuel.

Advantageously, the fuel tank is produced from plastic by the blow molding method or by the injection molding method. Preferably, the damping rib(s) is (are) molded in one piece with the top and/or bottom and/or side wall of the tank and manufactured at the same time as when the tank is produced. However, the damping rib(s) may also be formed on the top and/or bottom and/or side wall of the tank as a mounted portion, i.e. may be attached to a wall of the tank by any means known in the art (welding, snap-riveting, screwing, gluing, etc.).

According to a further aspect of the present invention, there is provided a motor vehicle comprising the fuel tank as described above. The following drawings are illustrative of exemplary embodiments and therefore do not limit the scope of the invention. They are presented to assist in providing a proper understanding of the invention. The present invention will hereinafter be described in conjunction with the accompanying figures, in which:
Figure 1 represents a perspective view of a baffle according to a particular embodiment of the present invention; and
Figures 2a and 2b represent partial perspective and sectional views of a fuel tank comprising a system for the reduction of slosh noises according to a particular embodiment of the present invention.

Throughout the figures, like reference numbers are used to designate like elements.

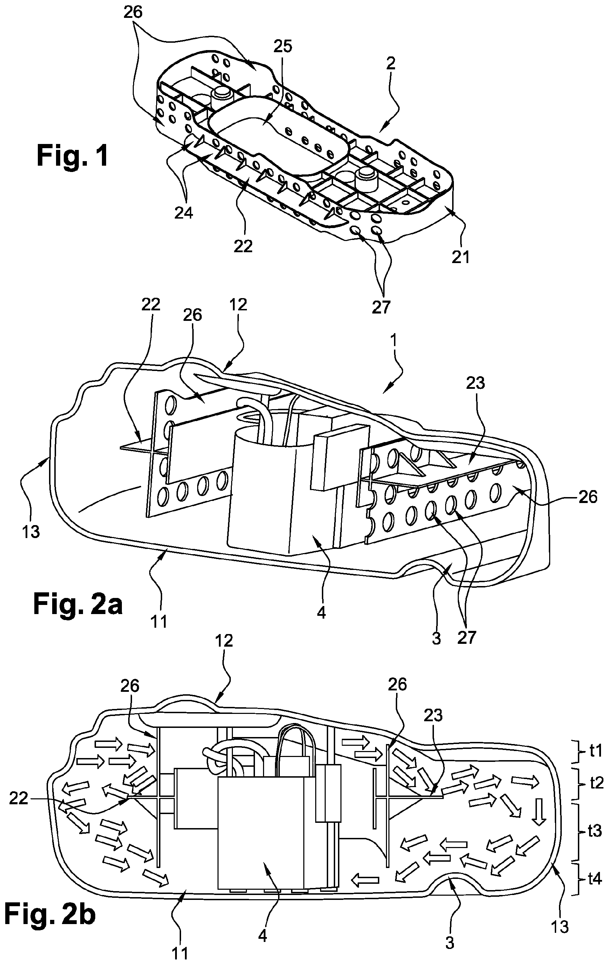

Figure 1 represents a perspective view of a baffle according to a particular embodiment of the present invention. The baffle 2 is intended for use in a slosh noises reduction system for a fuel tank which will be further described with reference to Figures 2a and 2b. The illustrated baffle 2 comprises a main body 21. The main body comprises a peripheral wall 26 which delimits and forms a cradle. The peripheral wall 26 comprises a plurality of through holes 27 arranged in a predetermined pattern for controlling fuel flow in a fuel tank. In the example of Figure 1, the cradle comprises an opening 25 configured to accommodate a fuel pump module 4 (illustrated in Figures 2a and 2b) inserted therethrough.

The illustrated baffle 2 comprises two side wings (22, 23). In the example of Figure 1, the baffle 2 is made of plastic. The side wings (22, 23) are molded in one piece with the main body 21. For example, the baffle 2 may be produced by the injection molding process. As illustrated in Figures 2a and 2b, each side wing is radially extending from the peripheral wall 26 toward the sidewall of the tank. In this particular embodiment, the surface of the side wing is essentially flat.

The illustrated baffle 2 comprises a plurality of strengthening ribs 24 extending between each side wing and the main body.

Further elements of the invention will now be explained with reference to Figures 2a and 2b. Figures 2a and 2b represent partial perspective and sectional views, respectively, of a fuel tank comprising a slosh noises reduction system according to a particular embodiment of the present invention.

The illustrated fuel tank 1 has a bottom wall 11, a top wall 12 and a sidewall 13 connecting the bottom wall with the top wall.

The system according to the invention comprises the baffle 2 of Figure 1 and further comprises a damping rib 3 molded in one piece with the bottom wall 11 of the fuel tank. In the illustrated examples of Figures 2a and 2b, the damping rib 3 protrudes inside the fuel tank and is configured to catch and disperse the waves generated inside the fuel tank. The illustrated damping rib 3 has a rounded shape. This allows a uniform and smooth dispersion of a surging wave.

Now referring to Figure 2b, at time 't1' the vehicle brakes and a wave of liquid fuel is generated inside the tank. At time 't2' the side wing 23 receives the wave and acts as a first wave damper. More precisely, the side wing 23 slows the velocity of the wave and deflects the wave onto the sidewall 13 of the tank. In the illustrated example, the sidewall 13 is slightly rounded in order to assist in reducing energy of the deflected wave. At time 't3' the deflected wave then flows along the sidewall 13 and reflects back from the sidewall and propagates toward the damping rib 3 at a particularly low velocity. At time 't4' the damping rib 3 receives the wave and acts as a second wave damper. More precisely, the damping rib 3 breaks and disperses the reflected waves. In this way, the energy of the generated wave is sequentially reduced and sloshing or other noises associated with movement of liquid fuel in the tank are reduced.

Preferably, in the embodiment of Figure 2b, the ratio of the high of the damping rib 3 protruding in the tank by the distance between the top wall and the bottom wall is comprised between 5% and 20% and even more preferably around 12%. Moreover, the ratio of the high of the side wing 23 in the tank by the distance between the top wall and the bottom wall is comprised between 30% and 55% from the top wall and even more preferably around 42%. This means that the damping rib 3 preferably protrudes in the tank, along a vertical direction in Figure 2b, as high as between 5% and 20% of the total high in the tank from the bottom wall. Finally, this means that the side wing 23 preferably locates in the tank, along a vertical direction in Figure 2b, as high as between 30% and 55% of the total high in the tank from the top wall.

In Figure 2b, the arrows illustrate the flow of fuel inside the tank.

Whilst the principles of the invention have been set out above in connection with specific embodiments, it is to be understood that this description is merely made by way of example and not as a limitation of the scope of protection which is determined by the appended claims.

Thus, for example, a plurality of damping ribs may be formed at the top and/or bottom and/or side wall of the tank and may be arranged one to another in a manner such that it creates a cascading damping effect (i.e. successive dispersion of the energy of the waves) from the end of time "t2". The side wing(s) may itself have a geometric shape improving said cascading damping effect of damping ribs by suitably orienting the wave of fuel during time "t2".

## Claims

1. A fuel tank (1) for a motor vehicle having a bottom wall (11), a top wall (12) and a sidewall (13) connecting the bottom wall with the top wall, and comprising a system for the reduction of slosh noises comprising a baffle (2) having a main body (21) standing between the bottom wall and the top wall of the fuel tank (1), wherein the baffle (2) comprises at least one side wing (22, 23) extending from the main body (21), **characterized in that** the system comprises at least one damping rib (3) formed on at least one wall (11, 12, 13) and protruding inside the fuel tank (1), and **in that** the at least one side wing (22, 23) extends from the main body (21) so as to slow down a flow of fuel and deflect the flow of fuel onto the at least one damping rib (3).

2. The fuel tank (1) according to claim 1, wherein the at least one side wing (22, 23) is molded in one piece with the main body (21).

3. The fuel tank (1) according to claim 1 or 2, wherein the baffle (2) comprises a plurality of strengthening ribs (24) extending between the at least one side wing (22, 23) and the main body (21).

4. The fuel tank (1) according to any of the preceding claims, wherein the at least one damping rib (3) is molded in one piece with the at least one wall (11, 12, 13) of the tank (1).

5. The fuel tank (1) according to any of claims 1 to 3, wherein the at least one damping rib (3) is mounted on the at least one wall (11, 12, 13) of the tank (1).

6. The fuel tank (1) according to any of the preceding claims, wherein the at least one damping rib (3) has a rounded shape.

7. The fuel tank (1) according to any of the preceding claims, wherein the main body (21) comprises a peripheral wall (26), and the at least one side wing (22, 23) is radially extending from the peripheral wall (26) toward the sidewall (13) of the fuel tank (1).

8. The fuel tank (1) according to the preceding claim, wherein the peripheral wall (26) delimits and forms a cradle, the cradle comprising at least one opening (25) configured to accommodate a fuel tank component inserted therethrough.

9. The fuel tank (1) according to the preceding claim, wherein the fuel tank component is a pump module (4).

10. The fuel tank (1) according to any of claims 7 to 9, wherein the peripheral wall (26) comprises a plurality of through holes (27).

11. The fuel tank (1) according to any of the preceding claims, wherein the baffle is made of plastic.

12. A motor vehicle comprising the fuel tank (1) according to any of the preceding claims.

## Patentansprüche

1. Kraftstofftank (1) für ein Kraftfahrzeug mit einer unteren Wand (11), einer oberen Wand (12) und einer Seitenwand (13), die die untere Wand mit der oberen Wand verbindet, aufweisend ein System zur Reduzierung von Schwappgeräuschen, das ein Ablenkblech (2) mit einem Hauptkörper (21) aufweist, der zwischen der unteren Wand und der oberen Wand des Kraftstofftanks (1) steht, wobei das Ablenkblech (2) mindestens einen Seitenflügel (22, 23) aufweist, der sich von dem Hauptkörper (21) aus erstreckt, **dadurch gekennzeichnet, dass** das System mindestens eine Dämpfungsrippe (3) aufweist, die an mindestens einer Wand (11, 12, 13) ausgebildet ist und in das Innere des Kraftstofftanks (1) hineinragt, und dass sich der mindestens eine Seitenflügel (22, 23) von dem Hauptkörper (21) aus erstreckt, um einen Kraftstoffstrom zu verlangsamen und den Kraftstoffstrom auf die mindestens eine Dämpfungsrippe (3) umzulenken.

2. Kraftstofftank (1) nach Anspruch 1, wobei der mindestens eine Seitenflügel (22, 23) einstückig mit dem Hauptkörper (21) geformt ist.

3. Kraftstofftank (1) nach Anspruch 1 oder 2, wobei das Ablenkblech (2) eine Vielzahl von Verstärkungsrippen (24) aufweist, die sich zwischen dem mindestens einen Seitenflügel (22, 23) und dem Hauptkörper (21) erstrecken.

4. Kraftstofftank (1) nach einem der vorhergehenden Ansprüche, wobei die mindestens eine Dämpfungsrippe (3) einstückig mit der mindestens einen Wand (11, 12, 13) des Tanks (1) vergossen ist.

5. Kraftstofftank (1) nach einem der Ansprüche 1 bis 3, wobei die mindestens eine Dämpfungsrippe (3) an der mindestens einen Wand (11, 12, 13) des Tanks (1) angebracht ist.

6. Kraftstofftank (1) nach einem der vorhergehenden Ansprüche, wobei die mindestens eine Dämpfungsrippe (3) eine abgerundete Form aufweist.

7. Kraftstofftank (1) nach einem der vorhergehenden Ansprüche, wobei der Hauptkörper (21) eine Umfangswand (26) aufweist und der mindestens eine Seitenflügel (22, 23) sich von der Umfangswand (26) radial in Richtung der Seitenwand (13) des Kraftstofftanks (1) erstreckt.

8. Kraftstofftank (1) nach dem vorhergehenden Anspruch, wobei die Umfangswand (26) eine Halterung begrenzt und bildet, wobei die Halterung mindestens eine Öffnung (25) aufweist, die so konfiguriert ist, dass sie eine Kraftstofftankkomponente aufnimmt, die dort hindurch eingesetzt ist.

9. Kraftstofftank (1) nach dem vorhergehenden Anspruch, wobei die Kraftstofftankkomponente ein Pumpenmodul (4) ist.

10. Kraftstofftank (1) nach einem der Ansprüche 7 bis 9, wobei die Umfangswand (26) eine Vielzahl von Durchgangslöchern (27) aufweist.

11. Kraftstofftank (1) nach einem der vorangehenden Ansprüche, wobei das Ablenkblech aus Kunststoff gefertigt ist.

12. Kraftfahrzeug mit dem Kraftstofftank (1) nach einem der vorhergehenden Ansprüche.

## Revendications

1. Un réservoir à carburant (1) pour un véhicule automobile, ayant une paroi inférieure (11), une paroi supérieure (12) et une paroi latérale (13) reliant la paroi inférieure à la paroi supérieure, et comprenant un système de réduction de bruits de ballotement comprenant un déflecteur (2) ayant un corps principal (21) s'étendant entre la paroi inférieure et la paroi supérieure du réservoir à carburant (1), le déflecteur (2) comprenant au moins une aile latérale (22, 23) s'étendant depuis le corps principal (21),
**caractérisé en ce que** le système comprend au moins une nervure d'amortissement (3) formée sur au moins une paroi (11, 12, 13) et faisant saillie à l'intérieur du réservoir à carburant (1), et **en ce que** ladite au moins une aile latérale (22, 23) s'étend depuis le corps principal (21) de manière à ralentir un écoulement de carburant et à dévier l'écoulement de carburant vers ladite au moins une nervure d'amortissement (3).

2. Le réservoir à carburant (1) selon la revendication 1, dans lequel ladite au moins une aile latérale (22, 23) est moulée en une seule pièce avec le corps principal (21).

3. Le réservoir à carburant (1) selon la revendication 1 ou la revendication 2, dans lequel le déflecteur (2) comprend une pluralité de nervures de renforcement (24) s'étendant entre ladite au moins une aile latérale (22, 23) et le corps principal (21).

4. Le réservoir à carburant (1) selon l'une quelconque des revendications précédentes, dans lequel ladite au moins une nervure d'amortissement (3) est moulée en une seule pièce avec ladite au moins une paroi (11, 12, 13) du réservoir (1).

5. Le réservoir à carburant (1) selon l'une quelconque des revendications 1 à 3, dans lequel ladite au moins une nervure d'amortissement (3) est montée sur ladite au moins une paroi (11, 12, 13) du réservoir (1).

6. Le réservoir à carburant (1) selon l'une quelconque des revendications précédentes, dans lequel ladite au moins une nervure d'amortissement (3) a une forme arrondie.

7. Le réservoir à carburant (1) selon l'une quelconque des revendications précédentes, dans lequel le corps principal (21) comprend une paroi périphérique (26), et ladite au moins une aile latérale (22, 23) s'étend radialement à partir de la paroi périphérique (26) vers la paroi latérale (13) du réservoir à carburant (1).

8. Le réservoir à carburant (1) selon la revendication précédente, dans lequel la paroi périphérique (26) délimite et forme un berceau, le berceau comprenant au moins une ouverture (25) configurée pour recevoir un composant de réservoir à carburant inséré à travers lui.

9. Le réservoir à carburant (1) selon la revendication précédente, dans lequel le composant de réservoir à carburant est un module de pompe (4).

10. Le réservoir à carburant (1) selon l'une quelconque des revendications 7 à 9, dans lequel la paroi périphérique (26) comprend une pluralité de trous traversants (27).

11. Le réservoir à carburant (1) selon l'une quelconque des revendications précédentes, dans lequel le déflecteur est fait en matière plastique.

12. Un véhicule automobile comprenant le réservoir à carburant (1) selon l'une quelconque des revendications précédentes.
